# EUROPÄISCHE PATENTSCHRIFT

(11) **EP 2 473 757 B1**
(45) Veröffentlichungstag und Bekanntmachung des Hinweises auf die Patenterteilung: **28.02.2018**
(21) Anmeldenummer: 10745654.3
(22) Anmeldetag: 27.08.2010
(51) Int. Cl.: F16F 13/18

(54) **HYDROLAGER**
HYDRAULIC SUPPORT
PALIER HYDRAULIQUE

(30) Priorität: 03.09.2009 DE 102009043939
(43) Veröffentlichungstag der Anmeldung: 11.07.2012
(73) Patentinhaber: ContiTech Luftfedersysteme GmbH, 30165 Hannover (DE)
(72) Erfinder: GEDENK, Volker, 30966 Hemmingen (DE)
(74) Vertreter: Finger, Karsten
(86) Internationale Anmeldenummer: PCT/EP2010/062541
(87) Internationale Veröffentlichungsnummer: WO 2011/026786

(56) Entgegenhaltungen:
- EP-A1- 0 851 145
- EP-A2- 1 217 251
- EP-B1- 1 346 166
- DE-A1- 19 641 239
- JP-A- 8 159 209
- JP-U- 4 071 837
- US-A- 5 356 123
- US-A- 5 779 231

## Beschreibung

Die Erfindung betrifft eine gummielastische Feder mit hydraulischer Dämpfung, welche ein ringförmiges gummielastisches Federelement ausweist, also ein Federelement aus einem Elastomer wie etwa Gummi oder einem Kunststoff mit gummielastischen Verhalten nach z.B. DIN 7724. Das zugehörige gummielastische Federelement ist über jeweils ein oberes und ein unteres ebenfalls ringförmiges, in aller Regel anvulkanisiertes Anschlussstück mit einerseits dem gefederten Körper und anderseits mit der ungefederten Masse verbunden. Wird eine solche gummielastische Feder als Fahrwerksfeder eines Fahrzeugs verwendet, so ist ein Anschlussstück mit der Karosserie als gefedertem Körper verbunden, während das andere Anschlussstück am Fahrwerk als ungefederte Masse angeschlossen ist. Die gummielastische Feder beinhaltet weiterhin eine aus einer Arbeitskammer und einer Ausgleichskammer bestehende Hydraulikkammer, die von dem ringförmigen Federelement und/oder den ringförmigen Anschlusstücken so umgeben ist dass sich bei Einfederung das Volumen der mit einem Dämpfungsmedium gefüllten Arbeitskammer verändert, sowie ein mit mindestens einem Verbindungskanal zwischen Arbeitskammer und Ausgleichskammer versehenes Trennelement.

Gattungsgemäße Federn, auch Hydrofedern genannt, sind im Stand der Technik bekannt. So offenbart die US 3,701,322 ist eine Gummifeder mit Flüssigkeitsdämpfung für Schienenfahrzeuge, bei der in der zwischen unten angeordneter Arbeitskammer und oben liegender Ausgleichskammer 2 Bohrungen in der Trenn- bzw. Dämpferplatte als Drosselbohrungen angeordnet sind. Bei Einfederung der dort gezeigten Hydrofeder wird die Arbeitskammer verkleinert, wodurch die Flüssigkeit in der Arbeitskammer durch die Drosselbohrungen gedrückt wird und durch die entstehende Dissipation dämpft. Die Ausbildung der Drosselbohrung erzeugt jedoch nachteiligerweise keine nennenswerte Dämpfung. Bei einer derartigen Drossel ergibt sich eine eher geringe Dämpfung, die zudem erst bei hohen Frequenzen einsetzt.
Die EP 1 346 166 B1 offenbart eine Hydrofeder mit Dämpfer, die aufgrund der relativ langen Dämpfungskanäle im Trennelement eine hinreichende Dämpfungswirkung bei stark unterschiedlichen Lasten und Frequenzen aufweist. Nachteiligerweise ist die Bauhöhe hier jedoch relativ groß.
Für die Erfindung bestand also die Aufgabe, eine Hydrofeder, d.h. eine gummielastische Feder mit hydraulischer Dämpfung bereitzustellen, die eine ausreichende und einstellbare Dämpfung in unterschiedlichen Frequenz- und Belastungsbereichen bereitstellt und trotzdem nur ein möglichst geringes Baumaß aufweist.
Gelöst wird diese Aufgabe durch die Merkmale des Hauptanspruchs. Weitere vorteilhafte Ausbildungen sind in den Unteransprüchen offenbart.

Dabei ist das Trennelement als aus mehreren übereinander angeordneten Scheiben mit einem sich in der Scheibenebene erstreckenden Verbindungskanal ausgebildet und innerhalb der vertikalen Bauhöhen des Federelementes und eines Anschlussstücks angeordnet, d.h. innerhalb der Höhenausdehnung dieser Teile in Federachse, bzw. Achse der Federkraftwirkung. Dabei ist das Trennelement innerhalb des Anschlussstückes so angeordnet ist, dass die Ausgleichskammer zwischen Trennelement und dem letzteren abgewandten Ende des Anschlussstückes ausgebildet ist.
Durch eine solche Anordnung der Bauteile und der damit erfolgenden Nutzung des "Innenraumes" der Feder als Raum für weitere Funktionselemente ergibt sich eine außerordentlich kompakte Bauweise. Erfindungsgemäß ist das gummielastische Federelement in Form eines nach oben geöffnetes Hohlkegels ausgebildet. Eine vorteilhafte Weiterbildung besteht darin, dass das in Form eines nach oben geöffnetes Hohlkegels ausgebildetes gummielastisches Federelement über ein an seinem Innenkegel anvulkanisiertes oberes und ein an seinem Außenkegel anvulkanisiertes unteres Anschlussstück mit einerseits dem gefederten Körper und anderseits mit der ungefederten Masse verbunden ist, und bei dem das Trennelement innerhalb des oberen Anschlussstückes so angeordnet ist, dass die Ausgleichskammer zwischen Trennelement und dem Ende des oberen Anschlussstückes ausgebildet ist. Durch die Kegelform werden nicht nur die Federeigenschaften optimiert, es steht auch - bei konzentrischer Anordnung - innerhalb der Bauteile bei gleicher Lastaufhahmefähigkeit der Feder ein größerer Hohlraum als "innerer Bauraum" zur Verfügung, so dass die Konstruktion und die Herstellung sich vereinfachen.
Eine weitere vorteilhafte Ausbildung besteht darin, dass das das Trennelement aufweisende Anschlussstück einen Sitz oder eine Ausnehmung zu Aufnahme des als Scheibe ausgebildeten Trennelementes aufweist, also z.B. eine Ausfräsung oder einen gedrehten Absatz. Damit ergibt sich eine sichere Positionierung bei der Herstellung und eine betriebssichere Fixierung. Erfindungsgemäß besteht das Trennelement aus mehreren übereinander angeordneten Scheiben, deren Kanäle miteinander kommunizierend verbunden sind. Dadurch lässt sich die Dämpfung über die letztlich durch mehrere Scheiben bereitgestellte Gesamtlänge des Arbeitsraum und Ausgleichsraum verbindenden Dämpfungskanales auf einfachste Weise bereits bei der Herstellung anpassen auf unterschiedliche Belastungen und Frequenzen, nämlich einfach durch Hinzufügen von weiteren Scheiben. Vorausgesetzt ist natürlich, dass die Maße passen und vorbereitete/vorgefräste Anschlussstücke vorhanden sind.
Eine weitere vorteilhafte Ausbildung besteht darin, dass die Länge des durch mehrere Scheiben gebildeten Verbindungskanales durch ein Verdrehen der Scheiben veränderbar ist. Damit lässt sich das gummielastische Federelement entweder auch nach der Herstellung auf veränderte Dämpfungseigenschaften bei unterschiedlichen Belastungen und Frequenzen anpassen oder aber mit einheitlichen "Normscheiben" nur durch Verdrehen bei der Herstellung auf unterschiedliche Anwendungen anpassen.
Eine weitere vorteilhafte Ausbildung besteht darin, dass die in den Scheiben befindlichen Verbindungskanäle einseitig eingefräst sind. Damit lassen sich auf besonders einfache und kostengünstige Weise die entsprechenden Kanäle herstellen. Die jeweilige Abdeckung der Kanäle erfolgt dann mindestens teilweise durch die benachbart anliegende Scheibe oder das Anschlussstück.
Eine weitere vorteilhafte Ausbildung besteht darin, dass der Ausgleichsraum durch einen Deckel am Ende des Anschlussstücks begrenzt ist. In Verbesserung der "offenen" Ausführung, die sowieso nur bei Ausbildung des Ausgleichsraum im oberen Anschlussstück möglich ist, wird hier die zur Dämpfung verwendete Flüssigkeit besonders gut gegen das Eindringen von Fremdkörpern oder Feuchtigkeit geschützt, Gleiches gilt für eine weitere vorteilhafte Ausbildung, die darin besteht, dass der Ausgleichsraum durch eine innerhalb des Anschlussstücks angeordnete Membran begrenzt ist. Mit eine solchen und zusätzlich ausgeprägt elastischen Membran lässt sich aber auch eine Überkopfbauweise realisieren, bei der der Ausgleichsraum unten angeordnet ist. Erfindungsgemäß ist das gummielastische Federelement als Schichtfeder, also als Gummi-Metall-Element ausgebildet. Damit erhöht sich die Tragfähigkeit der Feder, so dass sich Einfederung, Veränderung des Volumens des Arbeitsraumes und Dämpfung auf besonders hohe Belastungen auslegen lassen, was besonders bei z.B. Schienenfahrzeugen nötig ist, die zwischen unbeladenem und beladenem Zustand Lastunterschiede von etwa 1:5 auffangen müssen.
Die Eigenschaften der erfindungsgenäßen gummielastischen Feder hinsichtlich der Dämpfung und der Baugröße lassen sich demgemäß bei einem Fahrwerk für ein Schienenfahrzeug besonders gut nutzen. Vorteile bietet auch die Verwendung einer Gummielastische Feder als Maschinenlagerung, da auch hier Baugröße und Dämpfung die wesentlichen Eigenschaften sind.

Anhand eines Ausführungsbeispieles soll die Erfindung näher erläutert werden. Es zeigen
- Fig. 1: eine erfindungsgemäße gummielastische Feder
- Fig. 2: eine andere Ausführung einer erfindungsgemäßen gummielastischen Feder mit einem aus drei Scheiben bestehenden Trennelement
- Fig. 3: eine weitere Ausführung einer erfindungsgemäßen gummielastischen Feder mit einem aus drei Scheiben bestehenden Trennelement

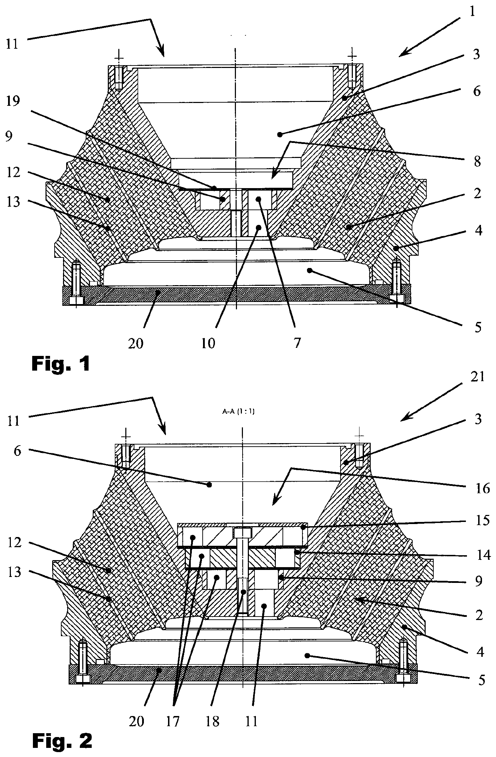

Die Fig. 1 zeigt eine gummielastische Feder 1 mit hydraulischer Dämpfung für eine Fahrwerk eines Schienenfahrzeugs, umfassend ein ringförmiges gummielastisches Federelement 2, welches über jeweils ein oberes und ein unteres ebenfalls ringförmiges Anschlussstück 3 und 4 mit einerseits dem gefederten Körper und anderseits mit der ungefederten Masse verbunden ist. Gefederter Körper und ungefederte Masse, also Karosserie und Fahrwerk des Schienenfahrzeugs sind hier nicht näher dargestellt.

Die gummielastische Feder 1 weist weiterhin eine aus einer Arbeitskammer 5 und einer Ausgleichskammer 6 bestehende Hydraulikkammer auf, die von dem ringförmigen Federelement 2 und dem ringförmigen Anschlusstücken 3 und 4 so umgeben ist, dass sich bei Einfederung das Volumen der mit Hydrauliköl als Dämpfungsmedium gefüllten Arbeitskammer 5 verändert. Ebenfalls ist ein mit mindestens einem Verbindungskanal 7 zwischen Arbeitskammer 5 und Ausgleichskammer 6 versehenes Trennelement 8 vorhanden, welches als mindestens eine Scheibe 9 mit einem sich in der Scheibenebene erstreckenden Verbindungskanal 7 ausgebildet ist.

Das obere Anschlussstück 3 weist dabei eine entsprechende Bohrung 10 auf, durch die das Hydrauliköl in den Verbindungskanal 7 eintreten kann. Das obere Anschlussstück 3 ist somit als kompakter topfförmiger Körper ausgebildet und somit entsprechend einfach und genau herzustellen.

Wenn sich bei Einfederung das Volumen der mit Hydrauliköl als Dämpfungsmedium gefüllten Arbeitskammer 5 verändert, respektive verkleinert, strömt Hydrauliköl über die Bohrung 10 und den Verbindungskanal 7 aus Arbeitskammer 5 in die Ausgleichskammer 6 und erzeugt Dämpfungsarbeit durch die dabei in der Strömung im Kanal 7 erzeugte Dissipation / Flüssigkeitsreibung.

Das Trennelement 8 ist innerhalb der vertikalen Bauhöhen des Federelementes 2 und des Anschlussstücks 3 angeordnet, und zwar so, dass die Ausgleichskammer 6 zwischen Trennelement 8 und dem letzteren abgewandten Ende 11 des Anschlussstückes 3 ausgebildet ist.

Das gummielastische Federelement 2 ist als Schichtfeder aufgebaut, also als Gummi-Metall-Element und in Form eines nach oben geöffneter Hohlkegels ausgebildet. Dementsprechend erkennbar sind in den Figuren die Gummiteile 12, die mit Metallringen 13 verstärkt sind.

Das gummielastische Federelement 2 ist über das an seinem Innenkegel anvulkanisiertes obere Anschlussstück 3 und über das an seinem Außenkegel anvulkanisiertes untere Anschlussstück 4 mit einerseits dem gefederten Körper und anderseits mit der ungefederten Masse verbunden (jeweils hier nicht näher dargestellt).

Das Anschlussstück 3, welches das Trennelement 8 aufweist, ist mit einem Sitz oder einer Ausnehmung zur Aufnahme von einer oder mehreren Scheiben 9, 14 und 15 versehen, welche einzeln oder gemeinsam das Trennelement ausbilden. Die Fig. 1 zeigt dabei eine gummielastische Feder 1, welche lediglich mit einer Scheibe 9 versehen ist, während Fig. 2 eine gummielastische Feder 21 darstellt, welche mit drei Scheiben 9, 14 und 15 versehen ist.

Das aus drei Scheiben 9, 14 und 15 bestehende Trennelement 16 ist so aufgebaut, dass die Kanäle der Scheiben 9, 14 und 15 miteinander kommunizierend verbunden sind und somit einen langen Verbindungskanal 17 bereitstellen. Dadurch lässt sich bei den beiden in der Fig. 1 und Fig. 2 gezeigten Versionen die Dämpfung über die Gesamtlänge des Verbindungskanales auf einfachste Weise auf unterschiedliche Belastungen und Frequenzen anpassen, ohne das Anschlussstück 3 zu verändern. Dies dient dem "Gleichteileprinzip" bei der Herstellung unterschiedliche Federelemente.

Die drei Scheiben 9, 14 und 15 können hier gegeneinander verdreht werden, so dass die Länge des durch drei Scheiben gebildeten Verbindungskanales 17 veränderbar ist. Natürlich können auch nur zwei Scheiben, beispielsweise die Scheiben 9 und 14 eingesetzt, auf eine entsprechende Länge des Verbindungskanals gedreht und dann fixiert werden, um weitere angepasste Dämpfungseigenschaften zu erreichen.

Die hier in den Scheiben 9, 14 und 15 befindlichen Verbindungskanäle sind nicht einseitig eingefräst, sondern in so genannten "gebauten" Scheiben angeordnet, die durch entsprechende Ringkörper und Deck- oder Zwischenscheiben aufgebaut und über eine zentrale Verschraubung 18 im Anschlussstück 3 fixiert sind. Die einzelne Scheibe 9 in der Fig. 1 ist ebenfalls eine "gebaute" Scheibe, die durch eine Deckscheibe 19 im Anschlussstück 3 fixiert ist.

Die Ausgleichskammer ist in den in der Fig.1 und Fig. 2 dargestellten Ausführungsbeispielen ist nach oben offen, während die Arbeitskammer 5 durch einen Deckel 20 am Ende des Anschlussstücks 4 geschlossen ist.

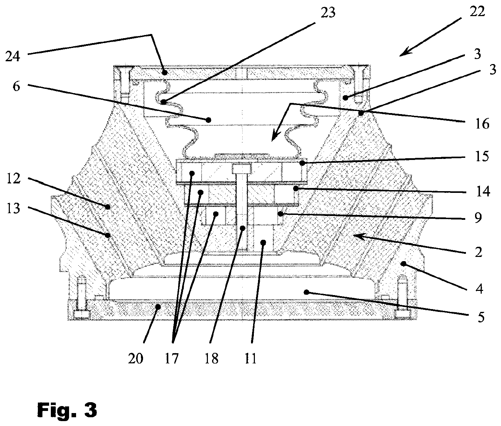

Die Fig. 3 zeigt eine weitere Ausführung einer gummielastischen Feder 22 mit einem aus drei Scheiben bestehenden Trennelement, bei der der Ausgleichsraum 6 durch eine innerhalb des Anschlussstücks angeordnete Membran 23 begrenzt und durch einen weiteren Deckel 24 verschlossen ist. Die Feder 22 ist damit als kompaktes allseitig geschlossenes Element gut gegen das Eindringen von Fremdkörpern oder Feuchtigkeit geschützt und kann bei Transport oder beim Einbau nicht beschädigt werden.

### Bezugszeichenliste

### (Teil der Beschreibung)

- 1: Gummielastische Feder
- 2: Gummielastisches Federelement
- 3: Anschlussstück
- 4: Anschlussstück
- 5: Arbeitskammer
- 6: Ausgleichskammer
- 7: Verbindungskanal
- 8: Trennelement
- 9: Scheibe mit Verbindungskanal
- 10: Bohrung
- 11: Oberes Ende des Anschlussstücks 3
- 12: Gummiteil
- 13: Metallring
- 14: Scheibe mit Verbindungskanal
- 15: Scheibe mit Verbindungskanal
- 16: Trennelement
- 17: Verbindungskanal
- 18: Verschraubung
- 19: Deckscheibe
- 20: Deckel
- 21: Gummielastische Feder
- 22: Gummielastische Feder
- 23: Membran
- 24: Deckel

## Patentansprüche

1. Gummielastische Feder (1) mit hydraulischer Dämpfung, welche folgende Einrichtungen umfasst
- ein ringförmiges gummielastisches Federelement (2), welches über jeweils ein oberes und ein unteres ebenfalls ringförmiges Anschlussstück (3, 4) mit einerseits dem gefederten Körper und anderseits mit der ungefederten Masse verbundbar ist,
- eine aus einer Arbeitskammer (5) und einer Ausgleichskammer (6) bestehende Hydraulikkammer, die von dem ringförmigen Federelement (2) und/oder den ringförmigen Anschlusstücken so umgeben ist, dass sich bei Einfederung das Volumen der mit einem Dämpfungsmedium gefüllten Arbeitskammer (5) verändert
- ein mit mindestens einem Verbindungskanal (7, 17) zwischen Arbeitskammer (5) und Ausgleichskammer (6) versehenes Trennelement (16), wobei
- das Trennelement (16) aus mehreren übereinander angeordneten Scheiben (9, 14, 15) besteht und jede Scheibe (9, 14, 15) mit einem sich in der Scheibenebene erstreckenden Verbindungskanal (7, 17) versehen ist und die Kanäle miteinander kommunizierend verbunden sind,
- und das Trennelement (16) innerhalb des Anschlussstückes (3, 4) so angeordnet ist, dass die Ausgleichskammer (6) zwischen Trennelement (16) und dem letzteren abgewandten Ende des Anschlussstückes ausgebildet ist,
**dadurch gekennzeichnet, dass**
das gummielastische Federelement (2) als Schichtfeder (12, 13) und in Form eines nach oben geöffneten Hohlkegels ausgebildet ist, und dass
das Trennelement (16) innerhalb der vertikalen Bauhöhen des Federelementes (2) und eines Anschlussstücks (3, 4) angeordnet ist.

2. Gummielastische Feder nach Anspruch 1, bei der das in Form eines nach oben geöffnetes Hohlkegels ausgebildetes gummielastisches Federelement
- über ein an seinem Innenkegel anvulkanisiertes oberes (3) und
- ein an seinem Außenkegel anvulkanisiertes unteres Anschlussstück (4) mit einerseits dem gefederten Körper und anderseits mit der ungefederten Masse verbundbar ist, und bei dem
- das Trennelement (16) innerhalb des oberen Anschlussstückes (3) so angeordnet ist, dass die Ausgleichskammer (6) zwischen Trennelement (16) und dem Ende (11) des oberen Anschlussstückes ausgebildet ist.

3. Gummielastische Feder nach Anspruch 1 oder 2, bei der das das Trennelement aufweisende Anschlussstück einen Sitz oder eine Ausnehmung zu Aufnahme des aus Scheiben (9, 14, 15) ausgebildeten Trennelementes (16) aufweist.

4. Gummielastische Feder nach Anspruch 3, bei der die Länge des durch mehrere Scheiben (9, 14, 15) gebildeten Verbindungskanales durch ein Verdrehen der Scheiben veränderbar ist.

5. Gummielastische Feder nach einem der Ansprüche 1 bis 4, bei der die in den Scheiben befindlichen Verbindungskanäle einseitig eingefräst sind.

6. Gummielastische Feder nach einem der Ansprüche 1 bis 5, bei der die Ausgleichskammer (6) durch einen Deckel (24) am Ende des Anschlussstücks (3) begrenzt ist.

7. Gummielastische Feder nach einem der Ansprüche 1 bis 6, bei der die Ausgleichskammer (6) durch eine innerhalb des Anschlussstücks (3) angeordnete Membran (23) begrenzt ist

8. Fahrwerk für ein Schienenfahrzeug mit einer Gummielastische Feder nach einem der Ansprüche 1 bis 8.

9. Verwendung einer Gummielastische Feder nach einem der Ansprüche 1 bis 8 als Maschinenlagerung.

## Claims

1. Rubber-elastic spring (1) with hydraulic damping, which comprises the following devices
- an annular rubber-elastic spring element (2), which can be connected on the one hand to the sprung body and on the other hand to the unsprung mass by means of an upper annular connection piece (3) and a lower, likewise annular connection piece (4) respectively,
- a hydraulic chamber, which consists of a working chamber (5) and a compensating chamber (6) and is surrounded by the annular spring element (2) and/or the annular connection pieces in such a way that, when there is inward spring deflection, the volume of the working chamber (5) filled with a damping medium changes,
- a separating element (16), which is provided with at least one connecting channel (7, 17) between the working chamber (5) and the compensating chamber (6),
wherein
- the separating element (16) consists of a number of discs (9, 14, 15) arranged one on top of the other and each disc (9, 14, 15) is provided with a connecting channel (7, 17) extending in the plane of the disc and the channels are connected to one another in a communicating manner,
- and the separating element (16) is arranged within the connection piece (3, 4) in such a way that the compensating chamber (6) is formed between the separating element (16) and the last, remote end of the connection piece,
**characterized in that**
the rubber-elastic spring element (2) is formed as a layered spring (12, 13) and in the form of an upwardly open hollow cone, and **in that**
the separating element (16) is arranged within the overall vertical heights of the spring element (2) and a connection piece (3, 4).

2. Rubber-elastic spring according to Claim 1, in which the rubber-elastic spring element (2) formed in the form of an upwardly open hollow cone
- can be connected by way of an upper connection piece (3), which is vulcanized on its inner cone, and
- a lower connection piece (4), which is vulcanized on its outer cone, on the one hand to the sprung body and on the other hand to the unsprung mass, and in which
- the separating element (16) is arranged within the upper connection piece (3) in such a way that the compensating chamber (6) is formed between the separating element (16) and the end (11) of the upper connection piece.

3. Rubber-elastic spring according to Claim 1 or 2, in which the connection piece having the separating element has a seat or a recess for receiving the separating element (16) formed by discs (9, 14, 15).

4. Rubber-elastic spring according to Claim 3, in which the length of the connecting channel formed by a number of discs (9, 14, 15) can be changed by turning the discs.

5. Rubber-elastic spring according to one of Claims 1 to 4, in which the connecting channels located in the discs are milled in on one side.

6. Rubber-elastic spring according to one of Claims 1 to 5, in which the compensating chamber (6) is bounded by a cover (24) at the end of the connection piece (3).

7. Rubber-elastic spring according to one of Claims 1 to 6, in which the compensating chamber (6) is bounded by a membrane (23) arranged within the connection piece (3).

8. Running gear for a rail vehicle with a rubber-elastic spring according to one of Claims 1 to 8.

9. Use of a rubber-elastic spring according to one of Claims 1 to 8 as a machine mounting.

## Revendications

1. Ressort en caoutchouc élastique (1) avec amortissement hydraulique, comprenant les dispositifs suivants :
- un élément de ressort en caoutchouc élastique annulaire (2) qui peut être raccordé à chaque fois par le biais d'une pièce de raccordement supérieure et d'une pièce de raccordement inférieure, également annulaires (3, 4) d'une part avec le corps amorti élastiquement et d'autre part avec la masse non amortie élastiquement,
- une chambre hydraulique constituée d'une chambre de travail (5) et d'une chambre d'équilibrage (6), laquelle chambre hydraulique est entourée par l'élément de ressort annulaire (2) et/ou par une pièce de raccordement annulaire de telle sorte que lors de la compression du ressort, le volume de la chambre de travail (5) remplie d'un fluide d'amortissement soit modifié,
- un élément de séparation (16) pourvu d'au moins un canal de liaison (7, 17) entre la chambre de travail (5) et la chambre d'équilibrage (6),
- l'élément de séparation (16) se composant de plusieurs disques (9, 14, 15) disposés les uns au-dessus des autres et chaque disque (9, 14, 15) étant pourvu d'un canal de liaison (7, 17) s'étendant dans le plan des disques et les canaux étant connectés de manière à communiquer les uns avec les autres,
- et l'élément de séparation (16) étant disposé à l'intérieur de la pièce de raccordement (3, 4) de telle sorte que la chambre d'équilibrage (6) soit disposée entre l'élément de séparation (16) et l'extrémité opposée à celui-ci de la pièce de raccordement,
**caractérisé en ce que**
l'élément de ressort en caoutchouc élastique (2) est réalisé sous forme de ressort stratifié (12, 13) et sous forme de cône creux ouvert vers le haut, et **en ce que** l'élément de séparation (16) est disposé à l'intérieur des hauteurs de construction verticales de l'élément de ressort (2) et d'une pièce de raccordement (3, 4).

2. Ressort en caoutchouc élastique selon la revendication 1, dans lequel l'élément de ressort en caoutchouc élastique (2), réalisé sous la forme d'un cône creux ouvert vers le haut,
- peut être raccordé par le biais d'une pièce de raccordement supérieure (3) vulcanisée sur son cône intérieur et
- d'une pièce de raccordement inférieure (4) vulcanisée sur son cône extérieur, d'une part au corps amorti élastiquement et d'autre part à la masse non amortie élastiquement, et dans lequel
- l'élément de séparation (16) est disposé à l'intérieur de la pièce de raccordement supérieure (3) de telle sorte que la chambre d'équilibrage (6) soit réalisée entre l'élément de séparation (16) et l'extrémité (11) de la pièce de raccordement supérieure.

3. Ressort en caoutchouc élastique selon la revendication 1 ou 2, dans lequel la pièce de raccordement présentant l'élément de séparation présente un siège ou un évidement pour recevoir l'élément de séparation (16) réalisé sous forme de disques (9, 14, 15).

4. Ressort en caoutchouc élastique selon la revendication 3, dans lequel la longueur du canal de liaison formé par plusieurs disques (9, 14, 15) peut être modifiée par une rotation des disques.

5. Ressort en caoutchouc élastique selon l'une quelconque des revendications 1 à 4, dans lequel les canaux de liaison se trouvant dans les disques sont fraisés d'un côté.

6. Ressort en caoutchouc élastique selon l'une quelconque des revendications 1 à 5, dans lequel la chambre d'équilibrage (6) est limitée par un couvercle (24) à l'extrémité de la pièce de raccordement (3).

7. Ressort en caoutchouc élastique selon l'une quelconque des revendications 1 à 6, dans lequel la chambre d'équilibrage (6) est limitée par une membrane (23) disposée à l'intérieur de la pièce de raccordement (3).

8. Train de roulement pour un véhicule ferroviaire comprenant un ressort en caoutchouc élastique selon l'une quelconque des revendications 1 à 8.

9. Utilisation d'un ressort en caoutchouc élastique selon l'une quelconque des revendications 1 à 8 en tant que support de machine.
